# EUROPÄISCHE PATENTANMELDUNG

(11) **EP 1 529 575 A2**
(43) Veröffentlichungstag der Anmeldung: **11.05.2005**
(21) Anmeldenummer: 04025926.9
(22) Anmeldetag: 02.11.2004
(51) Int. Cl.: B21D 26/02, B65G 27/02, B21D 22/02

(54) **Schüttgutsortierer**

(30) Priorität: 04.11.2003 DE 10351400
(71) Anmelder: Umformtechnik Alfred Burggraf GmbH, 82278 Althegnenberg (DE)
(72) Erfinder: Burggraf, Alfred, 82278 Althegnenberg (DE)
(74) Vertreter: Schwabe - Sandmair - Marx

(57) **Zusammenfassung**

Vorrichtung zur Schüttgutsortierung, bestehend aus einem Sortierbehälter (1) mit einer Behälterwandung (2) und mindestens einer Fördereinrichtung (3), wobei der Sortierbehälter durch die Behälterwandung und mindestens einer im Wesentlichen spiralig an der Behälterwandung umlaufenden Fördereinrichtung gebildet ist und der Sortierbehälter bestehend aus Behälterwandung und Fördereinrichtung aus einem Stück gefertigt ist und Verfahren zur Herstellung eines aus einem Stück gefertigten Sortierbehälters, mit einem Vorumformungsvorgang, wobei ein Niederhalter (12) eine Platte kraftschlüssig gegen die Oberseite (21) einer Matrize (11) drückt und ein Druckstempel (10) oder ein Wirkmedium zumindest einen Teil der Platte in die Matrize drückt, wobei die Platte durch den Druckstempel so vorumgeformt wird, dass der vorumgeformte Körper in etwa der endgültigen Form des Sortierbehälters angenähert ist.

## Beschreibung

Die vorliegende Erfindung betrifft einen Schüttgutsortierer, sowie ein Verfahren und eine Vorrichtung zur Herstellung eines Schüttgutsortierers, wie er zum Beispiel zum Sortieren von Schrauben, Nägeln, pharmazeutischen Erzeugnissen, wie Pillen, Kapseln usw. verwendet wird.

Schüttgutsortierer finden in einem großen Bereich der Industrie Anwendungen, insbesondere für die Sortierung von Produkten, die in großen Stückzahlen hergestellt werden, wie zum Beispiel in der Automobil-, Elektro-, Küchengeräte- oder Verpackungsindustrie (Verpacken von Tabletten in der Pharmaindustrie). Dazu ist es erforderlich, dass die zu sortierenden bzw. zu ordnenden Teile geordnet bzw. richtig positioniert einem Montagesystem, einer Verpackungsmaschine oder einer weiteren maschinellen Verarbeitung zugeführt werden. Meist ist es erforderlich, dass die in der Regel als Schüttgut vorliegenden Teile in einem quasistationären Teilestrom lagerichtig aus dem Schüttgutsortierer austreten. Dies erfolgt in sogenannten einoder mehrwendeligen Sortiereinsätzen oder Schüttgutsortierern.

Die zu sortierenden Teile können sich zum Beispiel in einem topfförmig ausgebildeten Schüttgutsortierer befinden, an dessen Wandungen eine oder mehrere spiralig umlaufende Wendeln verlaufen. Je nach Verwendungszweck weisen diese Wendeln unterschiedliche Steigungen und Geometrien auf, sie sind zum Beispiel kegel-, zylinder- oder stufenförmig. Der Sortiervorgang erfolgt dadurch, dass der Schüttgutsortierer in eine bestimmte Schwingung versetzt wird, der wiederum die in dem Schüttgutsortierer liegenden Teile in Schwingung versetzt. Dadurch kann das Schüttgut entlang der Wendeln den weiterverarbeitenden Maschinen oder Prozessen zugeführt werden.

Nach dem heutigen Stand der Technik bestehen diese Schüttgutsortierer aus komplexen Zuschnittsgeometrien, die durch aufwändige Schweißverfahren zusammengefügt werden. Anschließend ist eine Behandlung der Oberflächen, Schweißnähte und Kanten notwendig. Insbesondere in der pharmazeutischen Industrie werden aufgrund von Hygienebestimmungen Anlagen gefordert, die Schweißnähte im Kontaktbereich Schüttgut und Sortiervorrichtung bzw. Werkzeug vermeiden.

Es ist eine Aufgabe der vorliegenden Erfindung ein Verfahren und eine Vorrichtung bereitzustellen, die eine wirtschaftlichere Herstellung eines Schüttgutsortierers ermöglichen.

Diese Aufgabe wird durch die Gegenstände der unabhängigen Ansprüche gelöst. Vorteilhafte Ausführungsformen ergeben sich aus den Unteransprüchen.

Die Erfindung bezieht sich gemäß eines ersten Aspekts auf eine Vorrichtung zur Schüttgutsortierung, die im Wesentlichen aus einem Sortierbehälter mit einer Behälterwandung und einer Fördereinrichtung besteht, wobei der Sortierbehälter durch die Behälterwandung und mindestens einer im Wesentlichen spiralig an der Behälterwandung umlaufenden Fördereinrichtung gebildet ist, und der Sortierbehälter bestehend aus der Behälterwandung und der Fördereinrichtung aus einem Stück gefertigt ist.

Der Begriff "Schüttgutsortierung" bezieht sich auf die Lageausrichtung und/oder den Transport von Festkörpern, jedoch auch von Flüssigkeiten, wobei unter Festkörpern auch feinkörnige Stoffe bzw. Stoffgemische verstanden werden. Ebenso schließt dieser Begriff auch das Trennen und Aussortieren von Bauteilen unterschiedlicher Größe, Gewicht, Geometrie und Material, sowie das Aussortieren von fehlerhaften Bauteilen ein. Ein ursprünglich in ungeordnetem, geschüttetem Zustand befindliches Schüttgut wird durch die Schüttgutsortierung unter Bildung kontinuierlicher Teileströme ausgerichtet, getrennt, aussortiert oder lagerichtig zugeführt.

Die Schüttgutsortierung wird verursacht durch eine kontinuierliche oder periodisch schwingende Bewegung bzw. Kraft, die durch weitere Bauteile verursacht wird. Ebenso ist die Überlagerung von mehrachsigen Schwingungen und/oder kontinuierlichen Translations- bzw. Rotationsbewegungen möglich.

Ein erfindungsgemäßer Sortierbehälter wird im Wesentlichen durch eine Behälterwandung und eine Fördereinrichtung gebildet. Der Behälter ist vorzugsweise topfförmig ausgebildet, wobei in diesem Fall der Boden des Behälters ein Teil des Behälters oder der Behälterwandung sein kann. In diesem Sortierbehälter befindet sich das zu sortierende Schüttgut, das mittels einer Fördereinrichtung bzw. mit Sortierbewegungen sortiert, ausgerichtet, getrennt oder lagerichtig zugeführt wird.

Der Sortierbehälter wird vorzugsweise aus einem Stück gefertigt, wobei dadurch Fertigungsmethoden des Urformens, des Umformens und des Trennens zu verstehen sind. Bevorzugt wird der Sortierbehälter durch Umformen hergestellt, geeignete Verfahren hierfür sind Innenhochdruckumformen, hydromechanisches Umformen, sowie superplastisches Umformen, andere Umformverfahren können jedoch auch verwendet werden.

Vorzugsweise ist oder wird der Sortierbehälter aus einer Platte geformt, wobei per Definition eine Platte ein ebener Körper ist, dessen Dicke im Verhältnis zu seiner flächenmäßigen Ausdehnung gering ist, zum Beispiel ein Blech. Daraus ergibt sich der Vorteil, dass der Sortierbehälter aus einem einfach verfügbarem Ausgangsmaterial durch die genannten Verfahren des Umformens hergestellt werden kann. Für die Wandstärke des Sortierbehälters gilt sinngemäß das Verhältnis von Dicke zür flächenmäßigen Ausdehnung einer Platte.

Bevorzugt ist die zur Herstellung des Sortierbehälters verwendete Platte aus Metall, aus Kunststoff oder aus einem Verbundwerkstoff gefertigt. Insbesondere bevorzugt ist, dass es sich bei der zur Herstellung des Sortierbehälters verwendeten Platte aus Metall um einen Edelstahl, idealerweise um einen nicht-rostenden Stahl handelt. Die Auswahl des Werkstoffs hängt von dem grundsätzlichen Herstellungsverfahren, wie Urformen, Umformen oder Trennen und dem Anwendungsgebiet des Sortierbehälters ab. Verbundwerkstoffe können sowohl Werkstoffkombinationen aus Metall und Kunststoff, wie zum Beispiel eine mit Kunststoff überzogene Metalloberfläche, oder eine mit Metall überzogene Kunststoffoberfläche oder Verbundwerkstoffe im Sinne von Werkstoffkombinationen wie Faserverbundwerkstoffe sein.

Der Vorteil einen Sortierbehälter einer Vorrichtung zur Schüttgutvorrichtung aus einem Stück zu fertigen ist, dass kompliziert herzustellende Schweißnähte vermieden werden. Ein weiterer Vorteil bei der Vermeidung von Schweißnähten ist, dass sich bei Anwendungen des Schüttgutsortierers im pharmazeutischen Bereich, zum Beispiel für Pillen, Tabletten, Kapseln, usw., keine negativen Einflüsse der Schweißnähte, wie zum Beispiel der Übergang von Schadstoffen aus der Schweißnaht auf das pharmazeutische Produkt, ergeben. Durch den Wegfall der Schweißnähte müssen diese auch nicht nachbearbeitet werden, wie es zur Zeit durch Abschleifen, Abrunden, Auftragen eines Oberflächen-Finish, Beschichtung, usw. im Stand der Technik durchgeführt wird. Es ist allgemein bekannt, dass sich durch die Verminderung von Arbeitsschritten bei der Herstellung von Produkten in der Regel Kosteneinsparungen ergeben.

Die Behälterwandung des Sortierbehälters formt diesen vorzugsweise etwa kegelförmig, zylinderförmig, kegelstumpfförmig, halbkugelförmig oder paraboloid, wobei auch andere im Wesentlichen rotationsmetrische Formen vorstellbar sind. Die Verwendung von Körpern, deren Grundflächen jedoch nicht rotationsmetrisch sind und zum Beispiel eckige oder ovale Grundflächen, wird hierdurch nicht ausgeschlossen.

Außerdem umfasst die Erfindung mindestens eine Fördereinrichtung, die an der bzw. durch die Behälterwandung gebildet ist und etwa vom Boden oder einer tiefen Stelle des Sortierbehälters beginnend in etwa spiralig in oder gegen den Uhrzeigersinn verlaufend, an der Behälterwandung gebildet ist. Die Fördereinrichtung kann innen und/oder außen an der Behälterwandung ausgeformt sein.

Unter "spiralig umlaufend" ist zu verstehen, dass die Fördereinrichtung mit einer bestimmten Steigung an der bzw. durch die Behälterwandung ausgeformt ist, wobei die Steigung konstant oder aber auch variabel und zum Beispiel auch Null, also eben sein kann.

Je nach spezifischer Anwendung der Vorrichtung zur Schüttgutsortierung ist die Fördereinrichtung im Bezug auf die Geometrie anders ausgebildet. Die Fördereinrichtung kann je nach Verwendungszweck auch sogenannte Schikanen umfassen, die das zu sortierende Schüttgut in eine gewünschte Lage ausrichten.

Die Erfindung bezieht sich gemäß eines zweiten Aspekts auf ein Verfahren zur Herstellung eines aus einem Stück gefertigten Sortierbehälters mit einem Vorumformungsvorgang, wobei ein Niederhalter eine Platte kraftschlüssig gegen die Oberseite einer Matrize drückt und ein Druckstempel oder ein Wirkmedium zumindest einen Teil der Platte in die Matrize drückt, wobei die Platte durch den Druckstempel oder das Wirkmedium so vorgeformt wird, dass der vorgeformte Körper in etwa der endgültigen Form des Sortierbehälters angenähert ist.

Das Verfahren zur Herstellung eines aus einem Stück gefertigten Sortierbehälters basiert auf Umformverfahren, vorzugsweise Tiefziehverfahren, Innenhochdruckumformen, hydromechanisches Umformen oder superplastisches Umformen, wobei es sich auch um eine Kombination von Umformverfahren handeln kann. Vorzugsweise wird der Sortierbehälter durch ein Umformverfahren hergestellt, bei dem ein über ein lokales Fließen oder lokales Verformen hinausgehendes Fließen des Materials ausschlaggebend ist. Lokales Fließen oder lokales Verformen kann beispielsweise ein reines Umbiegen des Halbzeugs sein, aus dem der Sortierbehälter hergestellt wird.

Das Verfahren zur Herstellung eines aus einem Stück gefertigten Sortierbehälters gliedert sich in mindestens einen von drei Vorgängen, nämlich einen Vorumformungsvorgang, einen Stauchungsvorgang und/oder einem Endumformungsvorgang.

Der Vorumformungsvorgang bezweckt, dass die Platte zu einem Körper vorgeformt wird, der zum Beispiel grob in etwa die endgültige Form des Sortierbehälters aufweist.

Zu Beginn des Vorumformungsvorgangs befindet sich gemäß einer Ausführungsform eine Platte aus geeignetem Material, vorzugsweise eine ebene Platte, auf der Oberseite einer Matrize bzw. liegt auf dieser auf und wird durch einen Druckstempel oder ein Wirkmedium teilweise in die Matrize gedrückt, wobei die Platte zumindest teilweise durch ein Niederhalteelement festgehalten wird.

Die Bewegung des Druckstempels in die Matrize erfolgt in der Regel mit einer Vorschubbewegung in die Vorschubrichtung, jedoch sind auch mehrere Vorschubbewegungen möglich, die durch Rückbewegungen entgegen der Vorschubrichtung unterbrochen werden können. Die Vorschubbewegung kann mit einer konstanten Geschwindigkeit erfolgen, ebenso sind aber auch Geschwindigkeitsänderungen während der Vorschubbewegung denkbar. Auch kann eine konstante Kraft, als auch eine sich zeitlich veränderliche Kraft die Vorschubbewegung des Druckstempels verursachen.

Optional kann der Vorumformungsvorgang auch über ein Wirkmedium verursacht werden, wobei als Wirkmedium ein Fluid, also sowohl Gase als auch Flüssigkeiten verwendet werden können.

Ein Niederhalteelement, vorzugsweise ein Niederhalter, ist in diesem Verfahren so steuerbar, dass das Niederhaltelement das Fließen des Materials der Platte in die Matrize beeinflussen kann. Das geschieht über die Anpresskraft, die konstant aber auch zeitlich veränderlich das Niederhalteelement kraftschlüssig gegen die Oberseite der Matrize drückt, so dass eine mehr oder weniger große Reibungskraft zwischen Platte und Matrize, sowie Platte und Niederhalteelement auftritt. Je nach Größe der Reibungskraft wird die Platte bei dem Vorumformungsvorgang verschieblich oder unverschieblich festgehalten. Gleiches gilt auch für einen sich eventuell anschließenden Stauchungsvorgang und/oder Endumformungsvorgang.

Nach Beendigung des Vorumformungsvorgangs weist der vorgeformte Körper in etwa die endgültige Form des Sortierbehälters auf.

Nach dem Vorumformungsvorgang kann sich ein Stauchungsvorgang anschließen, der gemäß einem Aspekt der Erfindung auch unabhängig von einem Vorumformungsvorgang zum Beispiel bei bestimmten Körpern durchgeführt werden kann. Der Stauchungsvorgang kann in einer anderen Vorrichtung, vorzugsweise jedoch in der gleichen Vorrichtung wie der Vorumformungsvorgang durchgeführt werden. Der Stauchungsvorgang, der durch eine oder mehrere in der Matrize angeordnete Stauchungsvorrichtungen verursacht wird, bewirkt ein Fließen von zusätzlichem Material der Platte in die Matrize. Vorteilhafterweise ergibt sich dadurch eine Materialansammlung des vorgeformten und gestauchten Sortierbehälters aus dem Material der Platte, so dass bei einem sich anschließendem Endumformungsvorgang mehr Material für das Endformen zur Verfügung steht, wobei dadurch Rissbildungen verhindert werden und stärkere Verformungen bei dem Endumformungsvorgang ermöglicht werden.

Vorzugsweise findet der Stauchungsvorgang an oder im Bereich der im Wesentlich am weitesten von dem Niederhalter entfernten Stelle in der Matrize statt.

Der Stauchungsvorgang kann jedoch auch an der Seitenwandung der Matrizeninnenseite durchgeführt werden.

Vorzugsweise wird der Stauchungsvorgang während oder nach dem Vorumformungsvorgang durchgeführt.

Nach dem Vorumformungsvorgang oder dem Stauchungsvorgang kann sich ein Endumformungsvorgang anschließen. Dieser Endumformungsvorgang kann in einer weiteren Vorrichtung, vorzugsweise jedoch in der selben Vorrichtung stattfinden, in der auch der Vorumformungsvorgang und/oder der Stauchungsvorgang durchgeführt wurden, durchgeführt werden.

Der Endumformungsvorgang kann mit einem Druckstempel, vorzugsweise jedoch mit einem Fluid, also sowohl Gasen als auch Flüssigkeiten, durchgeführt werden. Durch Erzeugung eines Drucks mit dem Fluid wird der vorgeformte Sortierbehälter gegen die Innenwandung der Matrize gedrückt und somit endumgeformt. Dieser Druck ist gegenüber dem Umgebungsdruck erhöht, im Folgenden kann dafür der Begriff "Hochdruck" genannt werden. Durch den Endumformungsvorgang wird im Wesentlichen die Fördereinreichung des Sortierbehälters gebildet. Vorteilhafterweise ergibt sich während des Endumformungsvorgangs und/oder des Vorumformungsvorgangs mit einem Fluid ein Druckprofil auf den vorgeformten Behälter, das senkrecht auf die Fläche des zu formenden Sortierbehälters, bevorzugt auch während des Vorumformungsvorgangs, steht. Dadurch wird sowohl ein gleichmäßiges Umformen gewährleistet, als auch eine Erzeugung von schwierig umzuformenden Konturen und Hinterschneidungen ermöglicht.

Die umzuverformende Platte, als auch der vorgeformte und/oder gestauchte Sortierbehälter, können vor, während und nach der Umformung jegliche Temperaturen aufweisen, bei denen das Material fest ist. Vorzugsweise jedoch findet der Vorumformungsvorgang, der Stauchungsvorgang und der Endumformungsvorgang bei Temperaturen des Materials statt, bei denen ein Fließen des Materials erleichtert ist. Diese Temperaturen erstrecken sich vorzugsweise von Raumtemperatur bis 1100 °C.

Die Erfindung bezieht sich gemäß eines dritten Aspekts auf eine Vorrichtung zur Herstellung eines aus einem Stück gefertigten Sortierbehälters mit einem Druckstempel, wobei sich in dem Druckstempel mindestens eine Fluidzuführungseinrichtung befindet. Die Fluidzuführungseinrichtung ist in einem Druckstempel integriert, so dass an der Oberfläche mindestens eine, vorzugsweise jedoch mehrere Druckausgangsbohrungen münden. Diese Druckausgangsbohrungen können in einem Hauptkanal münden, der sich in dem Druckstempel bis zu einer Druckeingangsöffnung erstreckt, wobei sich an dieser Druckeingangsöffnung eine geeignete Vorrichtung zur Erzeugung des für die Umformungsvorgänge erforderlichen Fluiddruck, anschließt befindet.

Die Innenwandung der Matrize weist eine Kontur auf, die im Wesentlichen der Kontur des fertigen Sortierbehälters entspricht. Die Innenwandung der Matrize kann jedoch auch eine Außenwandung sein, wenn die Matrize nicht eine Negativform, sondern eine Positivform ist.

Vorzugsweise weist die Matrize mindestens eine Fluidabführungseinrichtung auf. Die Fluidabführungseinrichtung ist an einer Seite mit einer Abpumpeinrichtung verbunden und mündet auf der anderen Seite in die Innenseite der Matrize, wenn diese eine Negativform ist bzw. auf die Außenseite, wenn die Matrize eine Positivform ist. Vorteilhafterweise kann über die Fluidabführungseinrichtung überschüssiges Fluid, das sich bei den Umformungsvorgängen zwischen der vorumzuformenden Platte bzw. dem endumzuformenden vorgeformten Sortierbehälter, also in einem Verdrängungsraum, befindet, abgesaugt werden, wobei dadurch bei den Umformungsvorgängen dem die Umformung verursachenden Druck, kein durch sich komprimierendes Fluid entstehender Gegendruck entgegenwirkt.

In der Matrize ist mindestens eine Vorrichtung integriert, die ein Aufstauchen der verformten Platte ermöglicht.

Vorzugsweise ist die Matrize einteilig oder mehrteilig ausgebildet.

Bevorzugt ist der Niederhalter mit einer die Anpresskraft regulierenden Vorrichtung verbunden.

Vorzugsweise befindet sich mindestens eine Stauchungsvorrichtung in Bezug auf den Niederhalter an der im Wesentlich niedrigsten oder untersten Stelle der Matrize.

Die Erfindung bezieht sich gemäß eines vierten Aspekts auf ein Verfahren zur Herstellung eines aus einem Stück gefertigten Sortierbehälters mit einem Endumformungsvorgang, wobei ein Fluid den vorgeformten Teil einer Platte in die Form einer Matrize drückt, wobei auf die vorgeformte Platte ein Deckel (vakuumdicht) aufgeschweißt ist.

Der angeschweißte Deckel dient als Hilfsvorrichtung für den Endumformungsvorgang. Vorteilhafterweise wird hier auf eine sehr einfache Weise ermöglicht, dass der für den Endumformungsvorgang erforderliche Fluiddruck erzeugt werden kann.

Vorzugsweise wird der Fluiddruck in dem durch den vorumgeformten Sortierbehälter und durch den Deckel gebildeten Volumen also in dem Druckraum, vor dem Endformungsvorgang abgesenkt, so dass sich durch das Absaugen von Luft im Wesentlichen ein Volumen bildet. Daraus ergibt sich der Vorteil, dass der Luftanteil und somit der Sauerstoffanteil in dem Druckraum reduziert, idealerweise eliminiert wird und danach unter Verwendung eines geeigneten Fluids, zum Beispiel eines Gases, insbesondere eines Edelgases, eine Zunderbildung auf dem endumzuformenden Sortierbehälter verhindert wird. Dadurch entfällt eine teuere Oberflächenbehandlung nach der Herstellung.

Die Erfindung bezieht sich gemäß eines fünften Aspekts auf eine Vorrichtung zur Herstellung eines aus einem Stück gefertigten Sortierbehälters, mit einer Matrize, einer Pressplatte und einem Deckel, wobei der vorgeformte Sortierbehälter in die Matrize eingelegt ist und auf den vorgeformten Sortierbehälter ein Deckel aufgeschweißt ist.

Prinzipiell kann die Matrize dieser Vorrichtung die bereits beschriebenen Merkmale aufweisen.

Bevorzugt wird der vorumgeformte Sortierbehälter in der Matrize mit einer Pressplatte über die aufgeschweißte Platte fixiert, das heißt so in die Matrize gedrückt, dass bei dem Endumformungsvorgang des Sortierbehälters der Sortierbehälter nicht aus der Matrize entweichen kann.

Ferner wird in Bezug auf weitere besonders bevorzugte Merkmale der Erfindung auch auf die Unteransprüche hingewiesen.

Anhand von Figuren werden die nachfolgend bevorzugten Ausführungsbeispiele der Erfindung beschrieben.

Die an den Ausführungsbeispielen offenbar werdenden Merkmale bilden je einzeln und in jeder Merkmalskombination die Gegenstände der Ansprüche vorteilhaft weiter.

Es zeigen:
- Figur 1: eine Seitenansicht im Vollschnitt des prinzipiellen Ausbaus eines Sortierbehälters.
- Figur 1a: eine Draufsicht des prinzipiellen Aufbaus eines Sortierbehälters.
- Figur 2: eine Seitenansicht im Vollschnitt eines stufenförmigen Sortierbehälters.
- Figur 3: eine Seitenansicht im Vollschnitt eines zylinderförmigen Sortierbehälters.
- Figur 4: eine Seitenansicht im Vollschnitt eines kegelförmigen Sortierbehälters.
- Figur 5: die geschnittene Seitenansicht einer erfindungsgemäßen Ausführungsform.
- Figur 6: eine Seitenansicht im Vollschnitt einer weiteren erfindungsgemäßen Ausführungsform.

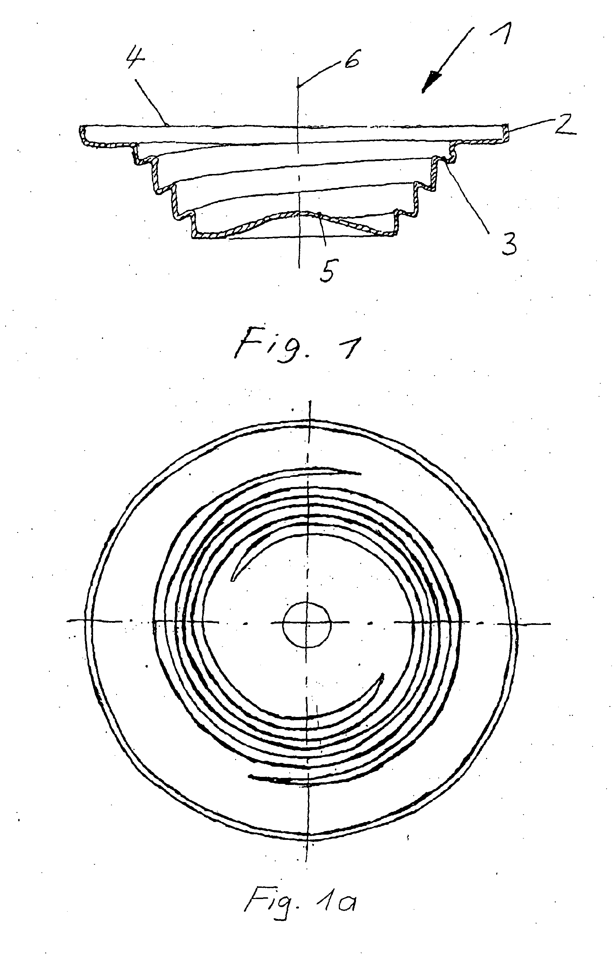

Figur 1 zeigt einen Sortierbehälter 1, der die prinzipiellen Merkmale eines Sortierbehälters gemäß dieser Erfindung aufweist. Der Sortierbehälter wird im Wesentlichen gebildet aus einer Behälterwandung 2 und mindestens einer im Wesentlichen spiralig an der Behälterwandung umlaufenden Fördereinrichtung 3. Die Behälterwandung 2 weist eine im Wesentlichen rotationssymmetrische Geometrie in Bezug auf eine Hochachse 6 auf. Der in diesem Ausführungsbeispiel gezeigte zweiwendelig und stufenförmig ausgebildete Sortierbehälter 1 weist beispielsweise die Form eines Drehparaboloids auf, wobei der Scheitelpunkt des Paraboloids im Weiteren auch im Bezug auf andere Geometrien des Sortierbehälters als Unterseite 5 des Sortierbehälters bezeichnet wird. Dementsprechend wird die nach oben hin geöffnete Seite als Oberseite 4 bezeichnet.

Die Fördereinrichtung 3 ist durch Umformung aus der Behälterwandung 2 gebildet, wobei der gesamte Sortierbehälter 1 mit einem geeigneten Umformverfahren aus einem Halbzeug, zum Beispiel einer blechähnlichen Platte, gebildet ist.

Die Figuren 2, 3 und 4 zeigen weitere Ausführungsformen eines erfindungsgemäßen Sortierbehälters.

Der Sortierbehälter gemäß Figur 2 ist stufenförmig durch die Aneinanderreihung von einem oder mehreren spiralig umlaufenden Fördereinrichtungen 3 gebildet. Die sonst sichtbare Behälterwandung 2 ist in dieser Ausführungsform nicht zu erkennen, sie liegt jedoch imaginär vor durch die Strichpunktlinie, die die Spitzen der aneinandergereihten Stufen 3 zu einer imaginären Behälterwandung 2 verbindet. Die Behälterwandung 2 bildet somit die Form eines Kegelstumpfes.

Figur 3 zeigt einen zylinderförmigen Sortierbehälter 1, an dessen Wandung 2 ebenfalls ein oder mehrere spiralig umlaufende Fördereinrichtungen 3 ausgebildet sind.

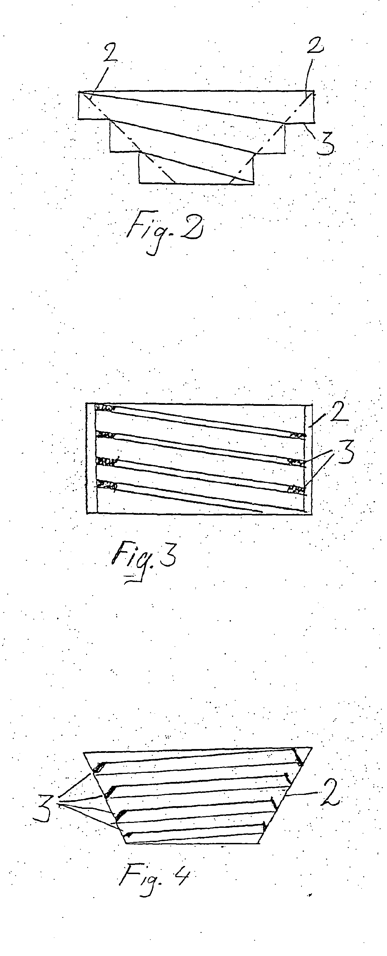

Figur 4 zeigt ebenso wie Figur 2 einen kegelförmigen Sortierbehälter 1, dessen Fördereinrichtung 3 nicht stufenförmig, sondern als eine Hervorragung ausgebildet ist.

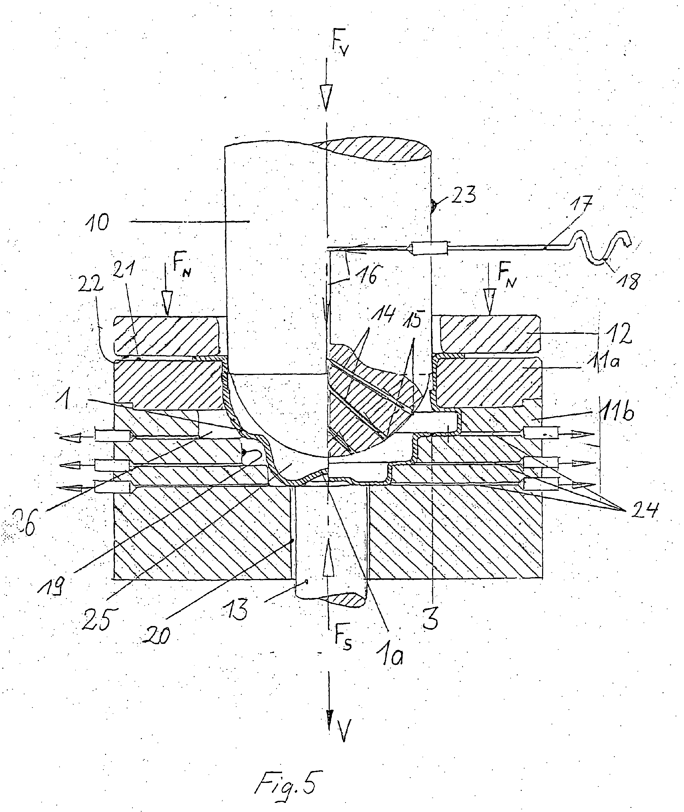

Figur 5 zeigt eine erfindungsgemäße Vorrichtung, in der der Vorumformungsvorgang, der Stauchungsvorgang und der Endumformungsvorgang durchführbar ist, ohne jedoch zwischen den Umformungsvorgängen das Halbzeug oder das Zwischenprodukt des Sortierbehälters 1 entnehmen zu müssen.

Die Vorrichtung besteht im Wesentlichen aus einer zweiteiligen Matrize 11, mit einem oberen Matrizenteil 11a und einem unteren Matrizenteil 11b, wobei der untere Matrizenteil 11b eine Negativform des endgültig geformten Sortierbehälters 1 aufweist. Die Negativform wird begrenzt durch die Innenwandung 19 der Matrize 11.

Auf der Unterseite des unteren Matrizenteils 11b, also dem Teil der Matrize 11, der sich am weitesten von dem Niederhalter 12 entfernt befindet, befindet sich die Stauchungsvorrichtung 13/20.

Die Stauchungsvorrichtung 13/20 wird gebildet aus einer Bohrung 20 und einem Stauchstempel 13, wobei der Innendurchmesser der Bohrung 20 und der Außendurchmesser des Stauchstempels 13 so gestaltet sind, dass der Stauchstempel 13 in und gegen die Vorschubrichtung V bewegbar ist.

Der obere Matrizenteil 11a besteht im Wesentlichen aus einer Platte, in der sich eine Bohrung befindet, die größer ist als der Außendurchmesser des Druckstempels 10, wobei die Achse der Bohrung ebenfalls die Achse der Bohrung 20 bildet. Die Bohrung des oberen Matrizenteils 11a weist einen Durchmesser auf, der kleiner ist, als der Durchmesser des Druckstempels addiert mit der zweifachen Dicke der Platte, aus der der Sortierbehälter 1 gebildet ist.

In dem unteren Matrizenteil 11b befinden sich Fluidabführungseinrichtungen 24, die sich von der Außenseite des unteren Matrizenteils 11b bis zur Innenwandung 19 der Matrize 11 erstrecken.

Das Halbzeug des umzuformenden Sortierbehälters 1 ist zwischen der Oberseite 21 der Matrize 11 und der Unterseite 22 des Niederhalters 12 eingespannt. Maßgeblich für die Einspannung ist die Niederhaltekraft F_{N}, die eine konstante Kraft, aber auch eine sich zeitlich verändernde Kraft sein kann.

Von der Seite des Niederhalters 12 her kommend, ist ein im Wesentlich aus einem Zylinder gebildeter Druckstempel 10 gebildet, an dessen zu dem Stauchstempel 13 zugewandten Teil eine Abrundung gebildet ist. Die Achse des Druckstempels 10 fällt mit der Achse des Stauchstempels 13 zusammen. Der Druckstempel 10 ist in und gegen eine Vorschubrichtung V bewegbar. Ursächlich dafür ist die Vorschubkraft Fᵥ, wobei es sich hier um eine konstante Kraft, aber auch um eine sich zeitlich verändernde Kraft handeln kann.

Von der Mantelfläche 23 des Druckstempels 10 erstreckt sich radial bis zum Zentrum des Zylinders ein Hauptkanal 16, der anschließend axial in die Vorschubrichtung V verläuft und sich dann in Druckausgangsbohrungen 14 aufspaltet. Die Druckausgangsbohrungen münden an der abgerundeten Oberfläche des Druckstempels 10 und bilden Druckausgangsöffnungen 15.

Über die Fluidzuleitung 17 und die flexible Leitung 18 wird über eine Vorrichtung, die Druck, insbesondere Hochdruck erzeugt, Fluid in die Druckkammer 25 der Vorrichtung gefördert. Die Druckkammer 25 ist gebildet durch den Zwischenraum des Druckstempels 10 und des zu verformenden Sortierbehälters 1.

Bei dem Vorumformungsvorgang wird das durch die Unterseite 22 des Niederhalters 12 und der Oberseite 21 der Matrize 11 festgehaltene Halbzeug (Platte) des zu formenden Sortierbehälters 1 durch die Kraft F_{N} eingespannt. Der Druckstempel bewegt sich in Folge der Kraft Fᵥ axial in die Vorschubrichtung V und drückt dadurch die Platte in die Matrize 11, wobei die dadurch entstehende Form des Zwischenprodukts des Sortierbehälters 1 in etwa der des Sortierbehälters 1 entspricht.

Bei dem Stauchungsvorgang wird der Druckstempel 10 entgegen der Vorschubrichtung V soweit zurückgezogen, dass er an der Unterseite Platz für den Stauchungsvorgang mit dem Stauchstempel 13 schafft. Der Druckstempel 10 steht jedoch noch soweit in Kontakt mit dem vorumgeformten Behälter, dass die Mantelfläche 23 des Druckstempels 10 mit einem Teil des vorumgeformten Sortierbehälters eine Abdichtung bildet, die den Druckraum 25 von der Umgebung abdichtet. Der Stauchungsvorgang wird durch den Stauchstempel 13 durchgeführt, indem der Stauchstempel 13 durch die Kraft F_{S} entgegen der Vorschubrichtung V in die Matrize 11 einfährt und dadurch das Material des vorumgeformten Sortierbehälters 1 aus dem Niederhalter 12 in die Matrize 11 zieht, wobei die Stauchkraft F_{S} sowohl eine konstante Kraft, als auch eine sich zeitlich verändernde Kraft sein kann.

Bei dem Endumformungsvorgang wird durch eine Vorrichtung zur Erzeugung eines Fluiddrucks ein Hochdruck im Druckraum 25 erzeugt, wodurch das sich in der Matrize 11 befindende Material des vorumgeformten Sortierbehälters 1 gegen die Innenwandung 19 der Matrize 11 endumgeformt wird.

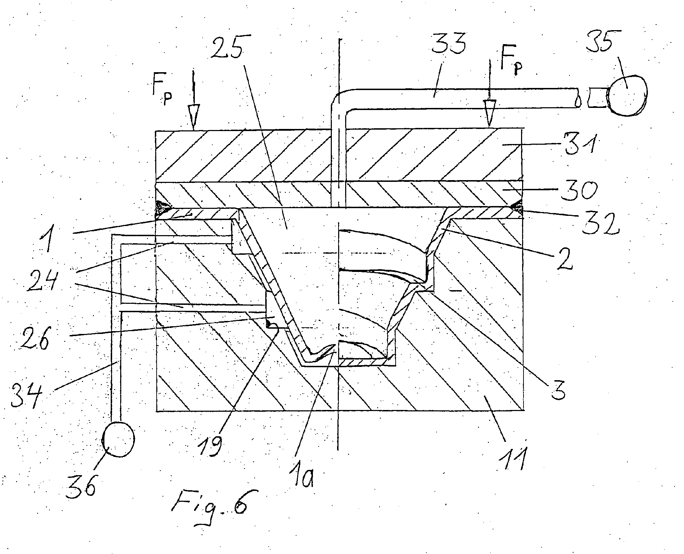

Eine weitere Ausführungsform zeigt Figur 6, in der ein bereits vorgeformter und vorgestauchter Sortierbehälter 1 in die Matrize 11 eingelegt ist, wobei ein Deckel 30 mit einer Schweißnaht 32 auf den vorgeformten und vorgestauchten Sortierbehälter 1 vakuumdicht aufgeschweißt ist. Auf dem Deckel 30 aufliegend befindet sich eine Pressplatte 31, die mit einer Kraft F_{P} über den Deckel 30 den vorgeformten Sortierbehälter 1 in die Matrize 11 drückt, so dass bei dem Endumformungsvorgang ein Entweichen des vorgeformten Sortierbehälters 1 aus der Matrize 11 verhindert wird. Die Kraft F_{P} kann entweder eine konstante Kraft oder aber eine sich zeitlich verändernde Kraft sein. Eine Pumpeneinheit 35 ist über eine Fluidzuführung 33 durch die Pressplatte 31 und den Deckel 30 mit dem Druckraum 25 verbunden.

Über eine Vakuumpumpe 36 und einer Fluidabführung 34, sowie der Fluidabführungseinrichtung 24, die in den Verdrängungsraum 26 der Matrize 11 mündet, kann der Verdrängungsraum 26 evakuiert werden.

Die Matrize 11 weist auch hier die Negativform der endgültigen Form des Sortierbehälters 1 auf.

Für den Endumformungsvorgang wird der Druckraum 25 über die Pumpeneinheit 35 evakuiert, zumindest jedoch wird im Druckraum 25 der Druck abgesenkt. Anschließend wird mit der Pumpeneinheit 35 und einem geeigneten Fluid, zum Beispiel ein inertes Gas, wie Argon, ein Hochdruck in dem Druckraum 25 erzeugt. Gleichzeitig wird über die Vakuumpumpe 36 der Verdrängungsraum 26 evakuiert. Durch den Druck im Druckraum 25 wird der vorgeformte Sortierbehälter 1 entsprechend der Negativform der Matrize 11 endumgeformt.

### Stückliste:

- 1:: Sortierbehälter
- 2:: Behälterwandung
- 3:: Fördereinrichtung
- 4:: Öffnung
- 5:: Unterseite
- 6:: Rotationsachse
- 7:: -
- 8:: -
- 9:: -
- 10:: Druckstempel
- 11:: Matrize
- 11a:: oberer Matrizenteil
- 11b:: unterer Matrizenteil
- 12:: Niederhalteeinrichtung, Niederhalter
- 13:: Stauchstempel
- 14:: Druckausgangsbohrung
- 15:: Druckausgangsöffnung
- 16:: Hauptkanal
- 17:: Fluidzuleitung
- 18:: flexible Leitung
- 19:: Innenwandung der Matrize
- 20:: Gleitpassung
- 21:: Oberseite der Matrize
- 22:: Unterseite des Niederhalters
- 23:: Mantelfläche des Druckstempels
- 24:: Fluidabführungseinrichtung
- 25:: Druckraum
- 26:: Verdrängungsraum
- 27:: -
- 28:: -
- 29:: -
- 30:: Deckel
- 31:: Pressplatte
- 32:: Schweißnaht
- 33:: Fluidzuführung
- 34:: Fluidabführung
- 35:: Pumpeneinheit
- 36:: Vakuumpumpe, Abpumpeinrichtung

- F_{T}: Presskraft
- F_{V}: Vorschubkraft
- Fₛ: Stauchkraft
- F_{N}: Niederhaltekraft

## Patentansprüche

1. Vorrichtung zur Schüttgutsortierung, bestehend aus einem Sortierbehälter (1) mit einer Behälterwandung (2) und mindestens einer Fördereinrichtung (3), wobei der Sortierbehälter (1) durch die Behälterwandung (2) und mindestens einer im Wesentlichen spiralig an der Behälterwandung (2) umlaufenden Fördereinrichtung (3) gebildet ist,
**dadurch gekennzeichnet, dass**
der Sortierbehälter (1) bestehend aus Behälterwandung (2) und Fördereinrichtung (3) aus einem Stück gefertigt ist.

2. Vorrichtung nach Anspruch 1, **dadurch gekennzeichnet, dass** der Sortierbehälter (1) aus einer Platte geformt ist.

3. Vorrichtung nach einem der vorherigen Ansprüche, **dadurch gekennzeichnet, dass** die Platte aus Metall, aus Kunststoff oder aus einem Verbundwerkstoff ist.

4. Vorrichtung nach einem der vorherigen Ansprüche, **dadurch gekennzeichnet, dass** die Platte aus nicht-rostendem Stahl ist.

5. Vorrichtung nach einem der vorherigen Ansprüche, **dadurch gekennzeichnet, dass** die Behälterwandung (2) des Sortierbehälters (1) im Wesentlichen kegelförmig, zylinderförmig, kegelstumpfförmig, halbkugelförmig oder paraboloid ist.

6. Vorrichtung nach einem der vorherigen Ansprüche, **dadurch gekennzeichnet, dass** die mindestens eine Fördereinrichtung (3) innen und/oder außen an der Behälterwandung (2) ausgeformt ist.

7. Verfahren zur Herstellung eines aus einem Stück gefertigten Sortierbehälters (1), mit einem Vorumformungsvorgang, wobei ein Niederhalter (12) eine Platte kraftschlüssig gegen die Oberseite (21) einer Matrize (11) drückt und ein Druckstempel (10) oder ein Wirkmedium zumindest einen Teil der Platte in die Matrize (11) drückt,
wobei die Platte durch den Druckstempel (10) so vorumgeformt wird, dass der vorumgeformte Körper in etwa der endgültigen Form des Sortierbehälters (1) angenähert ist.

8. Verfahren nach Anspruch 7, **dadurch gekennzeichnet, dass** nach dem Vorumformungsvorgang in einem Endumformungsvorgang die vorumgeformte Platte in die endgültige Form endumgeformt wird.

9. Verfahren nach einem der Ansprüche 7 oder 8, **dadurch gekennzeichnet, dass** die Platte nach dem Vorumformungsvorgang in der gleichen Matrize (11) endumgeformt wird.

10. Verfahren nach einem der Ansprüche 7 bis 9, **dadurch gekennzeichnet, dass** die Kraft des Niederhalters (12), mit der der Niederhalter (12) die Platte auf die Matrize (11) drückt, während der Umformungsvorgänge variiert werden kann.

11. Verfahren nach einem der Ansprüche 7 bis 10, **dadurch gekennzeichnet, dass** während oder nach dem Vorumformungsvorgang ein Stauchungsvorgang durchgeführt wird.

12. Verfahren nach Anspruch 11, **dadurch gekennzeichnet, dass** der Stauchungsvorgang an der Unterseite der Matrizeninnenseite und/oder an der Seitenwandung der Matrizeninnenseite durchgeführt wird.

13. Vorrichtung zur Herstellung eines aus einem Stück gefertigten Sortierbehälters (1), mit einem Druckstempel (10),
**dadurch gekennzeichnet, dass**
sich in dem Druckstempel (10) mindestens eine Fluidzuführungseinrichtung befindet.

14. Vorrichtung nach Anspruch 13, **dadurch gekennzeichnet, dass** die mindestens eine Fluidzuführungseinrichtung im Wesentlichen aus mindestens einer an die Oberfläche des Druckstempels (10) mündenden Druckausgangsbohrung (14) besteht.

15. Vorrichtung nach einem der Ansprüche 13 oder 14, **dadurch gekennzeichnet, dass** die Matrize (11) mindestens eine Fluidabführungseinrichtung (24) aufweist.

16. Vorrichtung nach Anspruch 15, **dadurch gekennzeichnet, dass** die mindestens eine Fluidabführungseinrichtung (24) mit einer Abpumpeinrichtung verbunden ist.

17. Vorrichtung nach Anspruch 13, **dadurch gekennzeichnet, dass** die Matrize (11) einteilig oder mehrteilig ausgebildet ist.

18. Vorrichtung nach einem der Ansprüche 13 bis 17, **dadurch gekennzeichnet, dass** der Niederhalter (12) mit einer anpresskraftregulierenden Vorrichtung verbunden ist.

19. Vorrichtung nach einem der Ansprüche 13 bis 18, **dadurch gekennzeichnet, dass** sich in der Matrize mindestens eine Stauchungseinrichtung (13/20) befindet.

20. Vorrichtung nach Anspruch 19, **dadurch gekennzeichnet, dass** sich die mindestens eine Stauchungsvorrichtung (13/20) an der im Wesentlichen am weitesten vom Niederhalter (12) entfernten Stelle in der Matrize (11) befindet.

21. Verfahren zur Herstellung eines aus einem Stück gefertigten Sortierbehälters (1), mit einem Endumformungsvorgang, wobei ein Fluid den vorgeformten Teil einer Platte in die Form einer Matrize (11) drückt,
**dadurch gekennzeichnet, dass**
auf die vorgeformte Platte ein Deckel (30) aufgeschweißt ist.

22. Verfahren nach Anspruch 21, **dadurch gekennzeichnet, dass** der Fluiddruck, in dem durch den vorumgeformten Sortierbehälter (1) und durch den Deckel (30) gebildeten Volumen (25), vor dem Endumformungsvorgang abgesenkt wird.

23. Vorrichtung zur Herstellung eines aus einem Stück gefertigten Sortierbehälters (1), mit einer Matrize (11) und einem Deckel (30), wobei der vorgeformte Sortierbehälter (1) in die Matrize (11) eingelegt ist,
**dadurch gekennzeichnet, dass**
auf den vorgeformten Sortierbehälter (1) ein Deckel (30) aufgeschweißt ist.

24. Vorrichtung nach Anspruch 23, **dadurch gekennzeichnet, dass** eine Pressplatte (31) über den aufgeschweißten Deckel (30), den vorgeformten Sortierbehälter (1) in der Matrize (11) fixiert.

25. Vorrichtung nach einem der Ansprüche 23 oder 24, **dadurch gekennzeichnet, dass** eine Abpumpeinrichtung (36) an das durch den Sortierbehälter (1) und durch den Deckel (30) gebildete Volumen (25) angeschlossen ist.

26. Vorrichtung nach einem der Ansprüche 23 bis 25, **dadurch gekennzeichnet, dass** die Matrize (11) mindestens eine Fluidabführungseinrichtung (24) aufweist.

27. Vorrichtung gemäss dem vorhergehenden Anspruch, **dadurch gekennzeichnet, dass** die mindestens eine Fluidabführungseinrichtung (24) mit einer Abpumpeinrichtung (36) verbunden ist.

28. Vorrichtung nach einem der Ansprüche 23 bis 27, **dadurch gekennzeichnet, dass** die Matrize (11) einteilig oder mehrteilig ausgeführt ist.
